# EUROPEAN PATENT APPLICATION

(11) **EP 4 507 385 A1**
(43) Date of publication of application: **12.02.2025**
(21) Application number: 22936211.6
(22) Date of filing: 08.04.2022
(51) Int. Cl.: H04W 36/08

(54) **CONFIGURATION INFORMATION TRANSMISSION METHOD AND APPARATUS**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/085971
(87) International publication number: WO 2023/193274

(57) **Abstract**

The present invention provides a configuration information transmission method and apparatus, which can be applied to a mobile communication technology. The method comprises: sending a first request message to a second communication node by means of a first communication node to indicate at least one target communication object which is recommended to be configured and/or not recommended to be configured by the first communication node, so that participating in the selection of the target communication object by the first communication node can be achieved, and the selected target communication object conforms to mobility management requirements actively initiated by the first communication node; and/or sending a first feedback message to the first communication node by means of the second communication node to indicate a target communication object configured by the second communication node and/or a target communication object which is rejected to be configured, so that the first communication node can know, in time, the configured target communication object and/or the target communication object which is rejected to be configured, and thus the mobility management is within the controllability of the first communication node.

## Description

### TECHNICAL FIELD

The disclosure relates to a field of mobile communication technology, in particular to a configuration information transmission method and an apparatus thereof.

### BACKGROUND

In a dual connectivity (DC) scenario, a terminal can access two cell groups, namely, a master cell group (MCG) and a secondary cell group (SCG). If changes are made to only the MCG or the SCG to which the terminal accesses, only signaling interaction between a source node and a target node is involved. If changes are made to both the MCG and the SCG at the same time, for example, condition-triggered mobility management or selective activation of CGs is performed on both the MCG and the SCG at the same time, a target master node (T-MN) needs to establish a connection with the SCG to achieve the mobility of the MCG and the SCG at the same time.

### SUMMARY

According to a first aspect of embodiments of the disclosure, a configuration information transmission method, applied to a first communication node, is provided. The method includes: sending a first request message for mobility management to a second communication node; and/or, receiving a first feedback message for the mobility management from the second communication node; in which at least one target communication object indicated by the first request message is at least one of a target communication object recommended to be configured or a target communication object not recommended to be configured; at least one target communication object indicated by the first feedback message is at least one of a target communication object configured already or a target communication object rejected to be configured.

In this technical solution, the first communication node sends a request message to the second communication node to indicate at least one target communication object recommended to be configured that is recommended by the first communication node and/or to indicate at least one target communication object not recommended to be configured that is not recommended by the first communication node, so that the first communication node can participate in selecting the target communication object, and the selected target communication object can be compatible with a requirement of the mobility management actively initiated by the first communication node, and/or, the second communication node sends a feedback message to the first communication node to indicate a target communication object configured already and/or a target communication object rejected to be configured by the second communication node, so that the first communication node can be aware of the target communication object configured already and/or the target communication object rejected to be configured in time, and the mobility management is within the control of the first communication node.

According to a second aspect of embodiments of the disclosure, a configuration information transmission method, applied to a second communication node, is provided. The method includes: receiving a first request message for mobility management sent by a first communication node; and/or sending a first feedback message for the mobility management to the first communication node; in which at least one target communication object indicated by the first request message is at least one of a target communication object recommended to be configured or a target communication object not recommended to be configured; at least one target communication object indicated by the first feedback message is at least one of a target communication object configured already or a target communication object rejected to be configured.

According to a third aspect of embodiments of the disclosure, a configuration information transmission apparatus is provided. The configuration information transmission apparatus can realize some or all of functions in the method described in the above first aspect, e.g., the functions of the configuration information transmission apparatus may have the functions in some or all the embodiments in the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the configuration information transmission apparatus includes: a transceiver module and a processing module. The processing module is configured to support the configuration information transmission apparatus to perform corresponding functions in the above methods. The transceiver module is configured to support communication between the configuration information transmission apparatus and other devices. The configuration information transmission apparatus may further include a storage module coupled to the transceiver module and the processing module, and is configured to store necessary computer programs and data for the configuration information transmission apparatus.

As an example, the processing module may be a processor. The transceiver module may be a transceiver or a communication interface. The storage module may be a memory.

According to a fourth aspect of embodiments of the disclosure, a configuration information transmission apparatus is provided. The configuration information transmission apparatus can realize some or all of functions in the method described in the above second aspect, e.g., the functions of the configuration information transmission apparatus may have the functions in some or all the embodiments in the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the configuration information transmission apparatus includes: a transceiver module and a processing module. The processing module is configured to support the configuration information transmission apparatus to perform corresponding functions in the above methods. The transceiver module is configured to support communication between the configuration information transmission apparatus and other devices. The configuration information transmission apparatus may further include a storage module coupled to the transceiver module and the processing module, and is configured to store necessary computer programs and data for the configuration information transmission apparatus.

According to a fifth aspect of embodiments of the disclosure, a communication device is provided. The communication device includes: a processor. When the processor calls a computer program stored in a memory, the method described in the first aspect above is implemented.

According to a sixth aspect of embodiments of the disclosure, a communication device is provided. The communication device includes: a processor. When the processor calls a computer program stored in a memory, the method described in the second aspect above is implemented.

According to a seventh aspect of embodiments of the disclosure, a communication device is provided. The communication device includes: a processor and a memory having computer programs stored thereon. The processor executes the computer programs stored in the memory, to cause the communication device to implement the method described in the first aspect above.

According to an eighth aspect of embodiments of the disclosure, a communication device is provided. The communication device includes: a processor and a memory having computer programs stored thereon. The processor executes the computer programs stored in the memory, to cause the communication device to implement the method described in the second aspect above.

According to a ninth aspect of embodiments of the disclosure, a communication device is provided. The communication device includes: a processor and an interface circuit. The interface circuit is configured to receive code instructions and transmit them to the processor. The processor is configured to run the code instructions to cause the communication device to perform the method described in the first aspect above.

According to a tenth aspect of embodiments of the disclosure, a communication device is provided. The communication device includes: a processor and an interface circuit. The interface circuit is configured to receive code instructions and transmit them to the processor. The processor is configured to run the code instructions to cause the communication device to perform the method described in the second aspect above.

According to an eleventh aspect of embodiments of the disclosure, a communication system is provided. The system includes the configuration information transmission apparatus of the third aspect and the configuration information transmission apparatus of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above communication device. When the instructions are executed, the communication device is caused to implement the method of the first aspect.

According to a thirteenth aspect of embodiments of the disclosure, a computer-readable storage medium is provided. The computer-readable storage medium is configured to store instructions used by the above communication device. When the instructions are executed, the communication device is caused to implement the method of the second aspect.

According to a fourteenth aspect of embodiments of the disclosure, a computer program product including computer programs is provided. When the computer programs are executed by a computer, the computer is caused to implement the method of the first aspect.

According to a fifteenth aspect of embodiments of the disclosure, a computer program product including computer programs is provided. When the computer programs are executed by a computer, the computer is caused to implement the method of the second aspect.

According to a sixteenth aspect of embodiments of the disclosure, a chip system is provided. The chip system includes at least one processor and an interface for supporting the communication device in realizing the functions involved in the first aspect, e.g., determining or processing at least one of data or information involved in the method described above. In a possible design, the chip system further includes a memory. The memory is configured to store necessary computer programs and data of the communication device. The chip system may consist of chips or may include a chip and other discrete devices.

According to a seventeenth aspect of embodiments of the disclosure, a chip system is provided. The chip system includes at least one processor and an interface for supporting the communication device in realizing the functions involved in the second aspect, e.g., determining or processing at least one of data or information involved in the method described above. In a possible design, the chip system further includes a memory. The memory is configured to store necessary computer programs and data of the communication device. The chip system may consist of chips or may include a chip and other discrete devices.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of an EN-DC architecture.
FIG. 2 is a schematic diagram of an NR-DC architecture.
FIG. 3 is a schematic diagram of a cell group in a dual connectivity scenario.
FIG. 4 is a schematic diagram of a communication system provided by an embodiment of the disclosure.
FIG. 5 is a flowchart of a configuration information transmission method provided by an embodiment of the disclosure.
FIG. 6 is a flowchart of a configuration information transmission method provided by an embodiment of the disclosure.
FIG. 7 is a flowchart of a configuration information transmission method provided by an embodiment of the disclosure.
FIG. 8 is a flowchart of a configuration information transmission method provided by an embodiment of the disclosure.
FIG. 9 is a flowchart of a configuration information transmission method provided by an embodiment of the disclosure.
FIG. 10 is a flowchart of a configuration information transmission method provided by an embodiment of the disclosure.
FIG. 11 is a flowchart of a configuration information transmission method provided by an embodiment of the disclosure.
FIG. 12 is a block diagram of a configuration information transmission apparatus provided by an embodiment of the disclosure.
FIG. 13 is a block diagram of a communication device provided by an embodiment of the disclosure.
FIG. 14 is a block diagram of a chip provided by an embodiment of the disclosure.

### DETAILED DESCRIPTION

For ease of understanding, the terms involved in the disclosure are first introduced.

### 1. Multi-Radio Dual Connectivity (MR-DC)

MR-DC refers to generalized Intra-Evolved-Universal Moblle Telecommunications System (UMTS) Terrestrial Radio Access (Intra-E-UTRA) dual connectivity. A terminal can use radio resources provided by two different schedules located on two different Next Generation Radio Access Network (NG-RAN) (i.e., 5G RAN) nodes and connected through non-ideal backhaul. One of the two nodes provides new radio (NR) access, the other node provides E-UTRA or NR access, and one node acts as a Master Node (MN), and the other node acts as a Secondary Node (SN). The MN and SN are connected via a network interface, and at least the MN is connected to a core network.

### 2, MR-DC using Evolved Packet Core (EPC)

Evolved-UMTS Terrestrial RAN (E-UTRAN) supports MR-DC through Evolved-UMTS Terrestrial Radio Access-New Radio Dual Connectivity (E-UTRA-NR DC or EN-DC for short). A terminal connects to an evolved NodeB (eNB, e.g., 4G base station) acting as an MN and an ENDC next generation NodeB (en-gNB, e.g., modified 5G base station) acting as an SN.

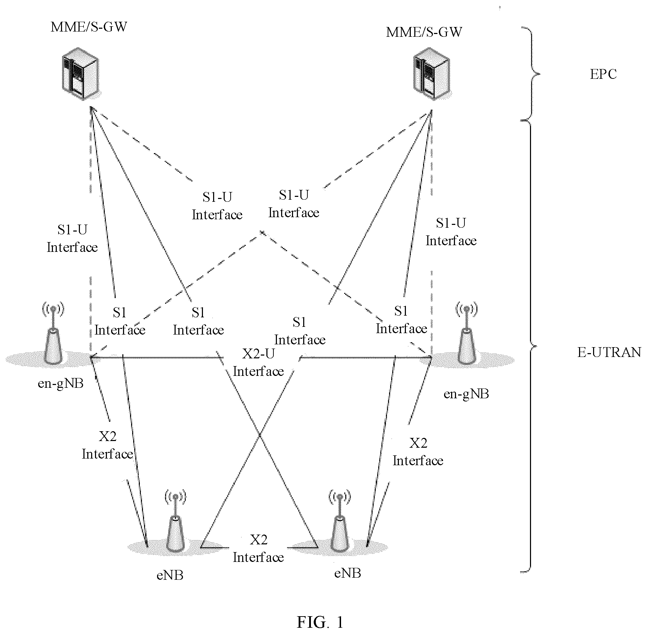

As an example, FIG. 1 illustrates a schematic diagram of an EN-DC architecture, in which the eNB is connected to the EPC via an S1 interface, and the eNB is connected to the en-gNB through an X2 interface. The en-gNB is connected to the EPC through an S1-U interface, and the en-gNB is connected to another en-gNB through an X2-U interface. In FIG. 1, MME is short for mobility management entity, and S-GW is short for serving gateway.

### 3. MR-DC using 5G core (5GC)

### (1) E-UTRA-NR Dual Connectivity NGEN-DC (NG-RAN E-UTRA-NR DC)

NG-RAN supports NGEN-DC. The terminal is connected to a next generation evolved NodeB (ng-eNB) acting as an MN and a gNB acting as an SN. The ng-eNB is connected to the 5GC, and the gNB is connected to the ng-eNB through an Xn interface.

### (2) NR-E-UTRA DC (NE-DC for short)

NG-RAN supports NE-DC. The terminal is connected to a gNB acting as an MN and an ng-eNB acting as an SN. The gNB is connected to the 5GC, and the ng-eNB is connected to the gNB via an Xn interface.

### (3) NR-NR DC (NR-DC for short)

NG-RAN supports NR-DC. The terminal is connected to a gNB acting as an MN and a gNB acting as an SN. The master gNB is connected to the 5GC via an NG interface, the secondary gNB is connected to the 5GC via an NG-U interface, and the gNBs are connected to each other via an Xn interface. Moreover, the NR-DC can also be used for the terminal to access a single gNB, in which case the gNB accessed by the terminal act as both the MN and the SN and configures both a master cell group (MCG) and a secondary cell group (SCG).

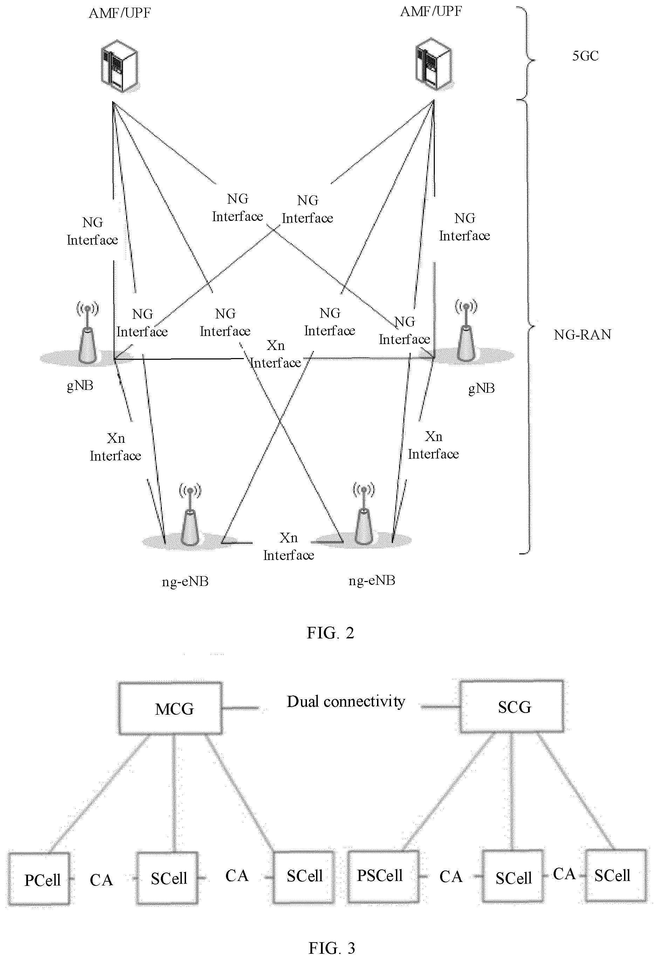

As an example, the NR-DC architecture can be as shown in FIG. 2.

### 4. Primary Cell (PCell), Secondary Cell (SCell), Primary SCell (PSCell)

In a dual-connection scenario, the terminal can access two cell groups, including an MCG and an SCG, which correspond to an MN and an SN respectively on a network device side. The MCG may include multiple cells. The cell used to initiate initial access is called PCell, which, as the name suggests, is the most "primary" cell in the MCG. As shown in FIG. 3, in addition to the PCell, the MCG further includes SCells, where the PCell and the SCells are aggregated through carrier aggregation (CA). The SCG includes a PSCell and SCells. Since most signalings are sent only on the PCell or PSCell, for the convenience of description, "Special Cell (SpCell)" is defined in the protocol. As shown in FIG. 3, PCell and PSCell can be collectively referred to as SpCell.

That is, the MCG includes a SpCell (PCell) and one or more SCells. MCG is a set of serving cells associated with an MN in the MR-DC. MN refers to a radio access node in the MR-DC that provides a control plane connection to a core network. The MN may be a master eNB (in EN-DC), a master ng-eNB (in NGEN-DC), or a master gNB (in NR-DC or NE-DC).

The SCG includes a SpCell (PSCell) and one or more SCells. SCG is a set of serving cells associated with an SN in the MR-DC. SN is a radio access node in the MR-DC that has no control plane connection to the core network, but provides an additional resource for the terminal. SN can be an en-gNB (in EN-DC), a secondary ng-eNB (in NE-DC), or a secondary gNB (in NR-DC or NGEN-DC).

### 5. Selective activation of cell groups

For Conditional Handover (CHO) in Rel-16 and Conditional PSCell Change (CPC) or Conditional PSCell Addition (CPA) in Rel-17, the terminals configured with CHO/CPC/CPA must release the configuration of CHO/CPC/CPA when random access to a target PCell/PSCell is completed. If a network device does not reconfigure and reinitialize CHO/CPC/CPA, the terminal may not be able to continue to support CHO/CPC/CPA, which may increase the latency of switching or SCG change and increase signaling overhead, especially in scenarios where the cell group (CG) is changed frequently under a FR2 HF band.

Therefore, in the mobility enhancement project, selective activation of CGs in the MR-DC is proposed. Selective activation of CGs allows CHO/CPC/CPA to still be executed after the CG is changed, without the need for the network device to reconfigure or reinitialize CHO/CPC/CPA, thereby reducing signaling overhead and the length of interruption during CG change.

### 6. Condition-triggered mobility management

In R16/R17, condition-triggered mobility management is introduced. The terminal realizes the condition-triggered mobility management based on a condition configured by the network device and associated candidate cells. The terminal triggers mobility management to access its associated candidate cell when the condition is met. The condition configured by the network device may be a specific measurement-based event, a location-based event, or a time-based event. The above associated candidate cell may be a candidate PCell or PSCell, which corresponds to condition-triggered mobility managements CHO and CPC/CPA, respectively.

However, currently, configuring both CHO and CPA/CPC is not supported. In order to improve robustness and reduce impact on the throughput of the terminal, the mobility enhancement project proposed a solution to study a combination of CHO and CPC/CPA. The CHO includes a target MCG and candidate SCGs for CPA.

In order to better understand a configuration information transmission method disclosed in the embodiments of the disclosure, a communication system to which the embodiments of the disclosure can be applied is first described below.

In order to make the objects, technical solutions, and advantages of the disclosure clearer, the embodiments of the disclosure will be described in further detail below in combination with the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

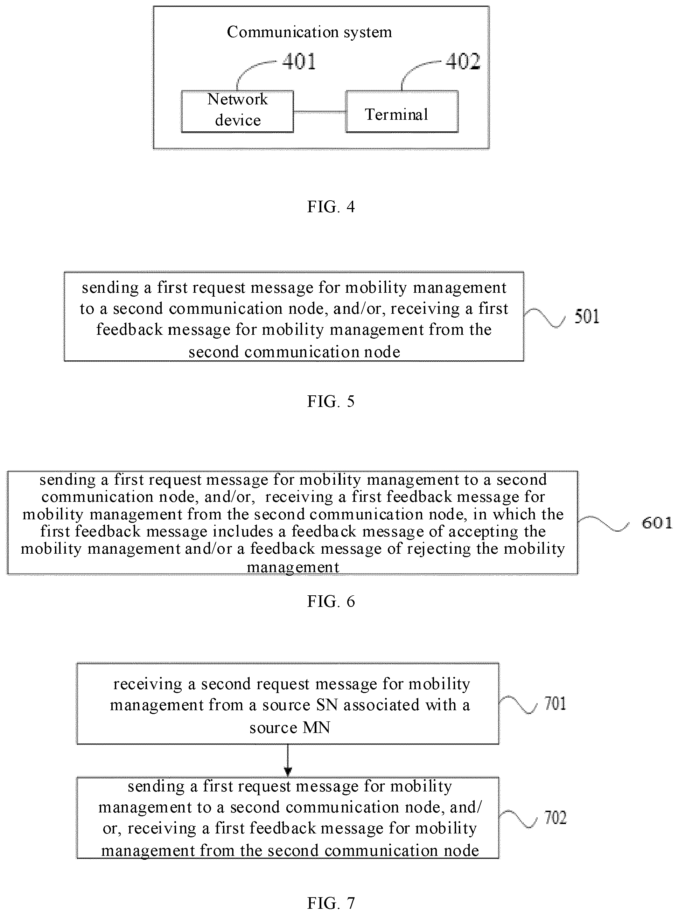

As illustrated in FIG. 4, FIG. 4 is a schematic diagram of a communication system provided in an embodiment of the disclosure. The communication system may include, but is not limited to, one network device and one terminal. The number and the form of devices illustrated in FIG. 1 are only for examples and do not constitute a limitation on the embodiments of the disclosure, and two or more network devices and two or more terminals may be included in practical applications. The communication system illustrated in FIG. 4 includes, for example, one network device 401 and one terminal 402.

It is noteworthy that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The network device 401 in the embodiments of the disclosure is an entity on a network side for transmitting or receiving signals. For example, the network device 401 may be an evolved NodeB (eNB), a transmission reception point/transmit receive point (TRP), a next generation NodeB (gNB) in a NR system, a base station in other future mobile communication systems, or an access point in a wireless fidelity (WiFi) system. The specific technology and specific device form adopted by the network device are not limited in the embodiments of the disclosure. The network device according to embodiments of the disclosure may be composed of a central unit (CU) and a distributed unit (DU). The CU may also be called control unit. The use of CU-DU structure allows to divide a protocol layer of the network device, such as a base station, such that some functions of the protocol layer are placed in the CU for centralized control, and some or all of the remaining protocol layer functions are distributed in the DU, and the DU is centrally controlled by the CU.

The terminal 402 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal can be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

In the communication system described above, in a dual-connection scenario, if changes are made only to an MCG or an SCG to which the terminal accesses, only signaling interaction between a source node and a target node is involved. However, if changes are made to both the MCG and the SCG simultaneously, for example, condition-triggered mobility management or selective activation of CGs is performed for the MCG and SCG simultaneously, a target MN (T-MN) needs to establish a connection with the SCG to achieve the mobility of the MCG and SCG at the same time.

However, in the above approach, the source node has no control over selection of the target SN (T-SN) and can only leave it all to the T-MN to decide which T-SN to select, which is inconsistent with requirements of simultaneous changes of the MCG and the SCG actively initiated by the source node. In addition, since the T-SN does not send feedback messages directly to the source node, the source node has no way of knowing the T-SN that configures the SCG, which makes the mobility management of the SCG beyond the control of the source node.

For the above problems, the disclosure provides a configuration information transmission method and a configuration information transmission apparatus.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

A configuration information transmission method and a configuration information transmission apparatus will be introduced in detail below with reference to the accompanying drawings.

As illustrated in FIG. 5, FIG. 5 is a flowchart of a configuration information transmission method provided by an embodiment of the disclosure. The configuration information transmission method may be performed by a first communication node, which may be a source node on a network device side in the communication system shown in FIG. 4, e.g., the first communication node may be a source MN (S-MN) or a source SN (S-SN), which is not limited in the disclosure.

S-MN is an MN currently serving the terminal when DC is configured for the terminal, and S-SN is an SN currently serving the terminal when DC is configured for the terminal.

The configuration information transmission method may be performed alone, or in combination with any embodiment or possible implementation of the embodiments of the disclosure, or in combination with any of the technical solutions in the related art.

As illustrated in FIG. 5, the configuration information transmission method includes but is not limited to the following steps.

At step 501, a first request message for mobility management is sent to a second communication node, and/or, a first feedback message for mobility management is received from the second communication node.

The first request message indicates at least one target communication object, which is at least one of a target communication object recommended to be configured or a target communication object not recommended to be configured. The first feedback message indicates at least one target communication object, which is at least one of a target communication object configured already or a target communication object rejected to be configured.

In the embodiments of the disclosure, the second communication node may be a target node, for example, a T-MN or a T-SN, which is not limited in the disclosure.

The T-MN may be an MN corresponding to a candidate target cell (denoted as a target cell in the disclosure) or an MN corresponding to a candidate target CG (denoted as a target CG in the disclosure) associated with the terminal. The target cell may include a target PCell and/or a target PSCell and/or a target SCell, and the target CG may include a target MCG and/or a target SCG. For example, the T-MN may be an MN corresponding to the target MCG.

The T-SN may be an SN corresponding to a target cell or a target CG. For example, the T-SN may be an SN corresponding to a target SCG.

In the embodiment of the disclosure, the target communication object may include at least one of the following: a target node, a target cell, or a target CG. The target node may include a T-MN and/or a T-SN.

As a possible implementation, the first communication node may send the first request message for mobility management to the second communication node. The first request message is used to indicate at least one target communication object, the at least one target communication object may include a target communication object recommended to be configured and/or a target communication object not recommended to be configured.

That is, in the disclosure, the first communication node can send a request message to the second communication node to indicate at least one target communication object recommended to be configured that is recommended by the first communication node, and/or to indicate at least one target communication object not recommended to be configured that is not recommended by the first communication node.

As an example, the first communication node may send a request message carrying a target communication object recommended to be configured and/or a target communication object not recommended to be configured to the second communication node. After receiving the request message, the second communication node may not indicate a target communication object configured already and/or a target communication object rejected to be configured in a feedback message sent to the first communication node.

As another possible implementation, the first communication node may receive the first feedback message for mobility management sent by the second communication node. The first feedback message is used to indicate at least one target communication object, and the at least one target communication object may include a target communication object configured already and/or a target communication object rejected to be configured.

That is, in the disclosure, the second communication node sends a feedback message to the first communication node to indicate the target communication object configured already and/or the rejected target communication object rejected to be configured of the second communication node.

As an example, the first communication node may send a request message not carrying a target communication object recommended to be configured and/or a target communication object not recommended to be configured to the second communication node. After receiving the request message, the second communication node may send a feedback message indicating a target communication object configured already and/or a rejected target communication object rejected to be configured to the first communication node.

As yet another possible implementation, the first communication node may send the first request message for mobility management to the second communication node. Correspondingly, after receiving the first request message sent by the first communication node, the second communication node sends the first feedback message to the first communication node in response to the first request message, and the first communication node may receive the first feedback message sent by the second communication node.

As an example, the first communication node may send a request message carrying a target communication object recommended to be configured and/or a target communication object not recommended to be configured to the second communication node. After receiving the request message, the second communication node sends a feedback message that indicates a target communication object configured already and/or a target communication object rejected to be configured to the first communication node.

In the configuration information transmission method of the embodiments of the disclosure, the first communication node sends the first request message for mobility management to the second communication node, and/or, receives the first feedback message for mobility management from the second communication node. The first request message indicates at least one target communication object, which is at least one of a target communication object recommended to be configured or a target communication object not recommended to be configured. The first feedback message indicates at least one target communication object, which is at least one of a target communication object configured already or a target communication object rejected to be configured. Therefore, the first communication node sends a request message to indicate at least one target communication object recommended to be configured that is recommended by the first communication node and/or at least one target communication object not recommended to be configured that is not recommended by the first communication node to the second communication node, so that the first communication node can participate in selecting the target communication object, and the selected target communication object can be compatible with a requirement of the mobility management actively initiated by the first communication node, and/or, the second communication node sends a feedback message to the first communication node to indicate a target communication object configured already by the second communication node and/or a target communication object rejected to be configured that is rejected by the second communication node, so that the first communication node can be aware of the target communication object configured already and/or the target communication object rejected to be configured in time, and the mobility management is within the control of the first communication node.

As illustrated in FIG. 6, FIG. 6 is a flowchart of a configuration information transmission method provided by an embodiment of the disclosure. The configuration information transmission method may be performed by a first communication node. The first communication node may be an S-MN or an S-SN on a network device side in the communication system shown in FIG. 4, which is not limited in the disclosure. The explanatory description of the S-MN or S-SN can be found in the relevant description in any embodiment of the disclosure, and will not be repeated herein.

The configuration information transmission method may be performed alone, or in combination with any embodiment or possible implementation of the embodiments of the disclosure, or in combination with any of the technical solutions in the related art.

As illustrated in FIG. 6, the configuration information transmission method includes but is not limited to the following steps.

At step 601, a first request message for mobility management is sent to a second communication node, and/or, a first feedback message for mobility management is received from the second communication node, in which the first feedback message includes a feedback message of accepting the mobility management and/or a feedback message of rejecting the mobility management.

The first request message indicates at least one target communication object, which is at least one of a target communication object recommended to be configured or a target communication object not recommended to be configured. The first feedback message indicates at least one target communication object, which is at least one of a target communication object configured already or a target communication object rejected to be configured.

The explanatory description of the second communication node and the target communication object may be found in the relevant description in any embodiment of the disclosure and will not be repeated herein.

It should be noted that step 601 can be found in the relevant description in any embodiment of the disclosure and will not be repeated herein.

In a possible implementation of the embodiments of the disclosure, the first feedback message is a feedback message of accepting the mobility management in the case where at least one already-configured target communication object indicated by the first feedback message is the target communication object recommended to be configured in the first request message.

For example, after receiving the first request message, if the second communication node selects at least one target communication object recommended to be configured in the first request message, it indicates that the second communication node accepts the mobility management, and the first communication node may continue the subsequent process of the mobility management, in this case, the second communication node may use the selected target communication object as a already-configured target communication object and send the feedback message of accepting the mobility management to the first communication node.

For example, the second communication node that sends the feedback message of accepting the mobility management and/or the corresponding already-configured target communication object may reserve resources for the request for the mobility management.

In another possible implementation of the embodiments of the disclosure, the first feedback message is a feedback message of rejecting the mobility management in the case where no already-configured target communication object indicated by the first feedback message is the target communication object recommended to be configured in the first request message.

For example, after receiving the first request message, if the second communication node selects at least one target communication object other than all the target communication objects recommended to be configured in the first request message, it indicates that the second communication node rejects all the target communication objects recommended to be configured in the first request message, in this case the second communication node may send the feedback message of rejecting the mobility management.

For example, the second communication node that sends the feedback message of rejecting the mobility management and/or the corresponding selected target communication object may not reserve resources for the request for the mobility management.

In another possible implementation of the embodiments of the disclosure, the first feedback message is a feedback message of rejecting the mobility management in the case where the target communication object rejected to be configured that is indicated by the first feedback message includes each target communication object recommended to be configured in the first request message.

For example, after receiving the first request message, if the second communication node rejects all the target communication objects recommended to be configured in the first request message or is unable to select a configurable target communication object among all the target communication objects recommended to be configured in the first request message, the second communication node may send the feedback message of rejecting the mobility management to the first communication node.

For example, the second communication node sends the feedback message of rejecting the mobility management may not reserve resources for the request for the mobility management.

In another possible implementation of the embodiments of the disclosure, in the case where at least one already-configured target communication object indicated by the first feedback message does not belong to the target communication object not recommended to be configured in the first request message, the first feedback message is a feedback message of accepting the mobility management.

For example, after receiving the first request message, if the second communication node selects at least one target communication object other than all the target communication objects not recommended to be configured in the first request message, it indicates that the second communication node does not reject the mobility management, and the first communication node may continue the subsequent process of the mobility management, in this case the second communication node may treat the selected target communication object as the already-configured target communication object and send the feedback message of accepting the mobility management to the first communication node.

For example, the second communication node that sends the feedback message of accepting the mobility management and/or the corresponding already-configured target communication object may reserve resources for the request for the mobility management.

In another possible implementation of the embodiments of the disclosure, if the target communication objects selected by the second communication node all belong to the target communication objects not recommended to be configured in the first request message, the first feedback message is a feedback message of rejecting the mobility management.

For example, after receiving the first request message, if the second communication node cannot select at least one target communication object other than all the target communication objects not recommended to be configured in the first request message, the second communication node can send the feedback message of rejecting the mobility management to the first communication node. Alternatively, after receiving the first request message, if the second communication node selects at least one target communication object not recommended to be configured in the first request message, the second communication node may send the feedback message of rejecting the mobility management to the first communication node.

For example, the second communication node that sends the feedback message of rejecting the mobility management may not reserve resources for the request for the mobility management.

In another possible implementation of the embodiments of the disclosure, if the target communication object rejected to be configured that is indicated by the first feedback message includes at least one target communication object not recommended to be configured in the first request message, the first feedback message is a feedback message of accepting the mobility management.

For example, after receiving the first request message, if the second communication node rejects the target communication object not recommended to be configured in the first request message, the second communication node may send the feedback message of accepting the mobility management to the first communication node.

For example, the second communication node that sends the feedback message of accepting the mobility management and/or the corresponding already-configured target communication object may reserve resources for the request for the mobility management.

In another possible implementation of the embodiments of the disclosure, if at least one already-configured target communication object indicated in the first feedback message is the target communication object not recommended to be configured in the first request message, the first feedback message is a feedback message of accepting the mobility management.

For example, after receiving the first request message, if the second communication node selects the target communication object not recommended to be configured in the first request message, the second communication node may send the feedback message of accepting the mobility management to the first communication node.

For example, the second communication node that sends the feedback message of accepting the mobility management and/or the corresponding already-configured target communication object may reserve resources for the request for the mobility management.

In another possible implementation of the embodiments of the disclosure, regardless of whether the first request message received by the second communication node includes the target communication object recommended to be configured and/or the target communication object not recommended to be configured, if the second communication node can configure at least one available target communication object, the first feedback message sent by the second communication node to the first communication node may be a feedback message of accepting the mobility management.

In another possible implementation of the embodiments of the disclosure, regardless of whether the first request message received by the second communication node includes the target communication object recommended to be configured and/or the target communication object not recommended to be configured, if the second communication node cannot configure an available target communication object, the first feedback message sent by the second communication node to the first communication node may be a feedback message of rejecting the mobility management.

For example, in an application scenario, the first communication node is an S-MN and the second communication node is a T-MN, the S-MN initiates an MCG mobility management procedure and sends a first request message to the T-MN. The first request message may include one or more MCGs recommended to be configured that are recommended by the S-MN, for initiating the MCG mobility management procedure.

After receiving the first request message sent by the S-MN, the T-MN can determine a set of MCG configurations from the MCGs recommended to be configured that are recommended by the S-MN and send a feedback message of accepting the mobility management to the S-MN. If the T-MN cannot determine a set of MCG configurations from the MCGs recommended to be configured that are recommended by the S-MN, the T-MN can send a feedback message of rejecting the mobility management to the S-MN and end the procedure.

It should be noted that the above-mentioned various possible implementations can be executed separately or in combination, which is not limited in the disclosure.

In the configuration information transmission method of the embodiments of the disclosure, the first communication node sends the first request message to the second communication node to indicate at least one target communication object recommended to be configured that is recommended by the first communication node and/or to indicate at least one target communication object not recommended to be configured that is not recommended by the first communication node, so that the first communication node can participate in selecting the target communication object, and the selected target communication object can be compatible with a requirement of the mobility management actively initiated by the first communication node, and/or, the second communication node sends the first feedback message to the first communication node to indicate the target communication object configured already and/or the target communication object rejected to be configured of the second communication node, so that the first communication node can be aware of the target communication object configured already and/or the target communication object rejected to be configured in time, and the mobility management is within the control of the first communication node.

It should be noted that the above-mentioned various possible implementations can be executed separately or in combination, which is not limited in the disclosure.

As illustrated in FIG. 7, FIG. 7 is a flowchart of a configuration information transmission method provided by an embodiment of the disclosure. The configuration information transmission method may be performed by a first communication node. The first communication node may be an S-MN on a network device side in the communication system shown in FIG. 4.

The configuration information transmission method may be performed alone, or in combination with any embodiment or possible implementation of the embodiments of the disclosure, or in combination with any of the technical solutions in the related art.

As illustrated in FIG. 7, the configuration information transmission method includes but is not limited to the following steps.

At step 701, a second request message for mobility management is received from a source SN associated with a source MN.

The second request message is used to indicate at least one target communication object recommended to be configured that is recommended by the source SN, and/or, at least one target communication object not recommended to be configured that is not recommended by the source SN.

In the embodiments of the disclosure, the S-MN may receive the second request message for mobility management sent by the S-SN associated with the S-MN, in which the second request message is used to indicate at least one target communication object recommended to be configured that is recommended by the S-SN, and/or, at least one target communication object not recommended to be configured that is not recommended by the S-SN.

At step 702, a first request message for the mobility management is sent to a second communication node, and/or, a first feedback message for the mobility management is received from the second communication node.

The first request message indicates at least one target communication object, which is at least one of a target communication object recommended to be configured (e.g., at least one target communication object recommended to be configured that is recommended by the S-SN) or a target communication object not recommended to be configured (e.g., at least one target communication object not recommended to be configured that is not recommended by the S-SN). The at least one target communication object indicated by the first feedback message is a target communication object configured already or a target communication object rejected to be configured.

In an embodiment of the disclosure, after receiving the second request message for mobility management sent by the S-SN associated with the S-MN, the S-MN may generate a first request message according to the second request message. That is, the S-MN may generate the first request message according to at least one target communication object recommended to be configured that is recommended by the S-SN and/or at least one target communication object not recommended to be configured that is not recommended by the S-SN, and send the first request message to the second communication node.

It is noted that step 702 may be achieved by any implementation in the embodiments of the disclosure, which is not limited in the embodiments of the disclosure and will not be repeated.

In the configuration information transmission method of the embodiments of the disclosure, the S-MN sends the first request message to the second communication node to indicate at least one target communication object recommended to be configured and/or at least one target communication object not recommended to be configured of the S-SN associated with the S-MN, so that the S-SN or S-MN can participate in selecting the target communication object, and the selected target communication object can be compatible with a requirement of the mobility management actively initiated by the S-MN, and/or, the second communication node sends the first feedback message to the S-MN to indicate the target communication object configured already and/or the target communication object rejected to be configured of the second communication node, so that the S-MN can be aware of the target communication object configured already and/or the target communication object rejected to be configured in time, and the mobility management is within the control of the S-MN.

It should be noted that the above-mentioned various possible implementations can be executed separately or in combination, which is not limited in the disclosure.

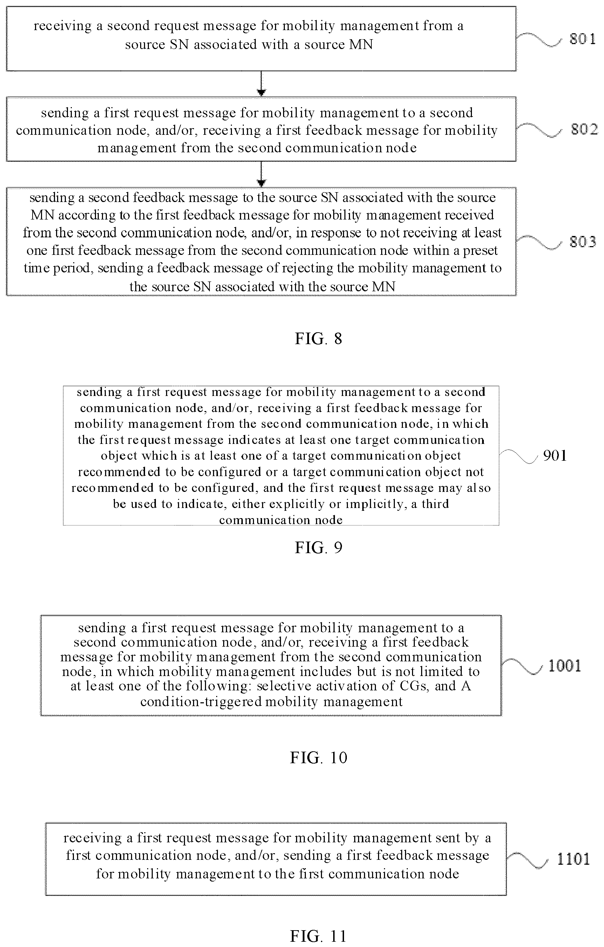

As illustrated in FIG. 8, FIG. 8 is a flowchart of a configuration information transmission method provided by an embodiment of the disclosure. The configuration information transmission method may be performed by a first communication node. The first communication node may be an S-MN on a network device side in the communication system shown in FIG. 4.

The configuration information transmission method may be performed alone, or in combination with any embodiment or possible implementation of the embodiments of the disclosure, or in combination with any of the technical solutions in the related art.

As illustrated in FIG. 8, the configuration information transmission method includes but is not limited to the following steps.

At step 801, a second request message for mobility management is received from a source SN associated with a source MN.

The second request message is used to indicate at least one target communication object recommended to be configured that is recommended by the source SN, and/or, at least one target communication object not recommended to be configured that is not recommended by the source SN.

At step 802, a first request message for the mobility management is sent to a second communication node, and/or, a first feedback message for the mobility management is received from the second communication node.

The first request message indicates at least one target communication object, which is at least one of a target communication object recommended to be configured or a target communication object not recommended to be configured. The first feedback message indicates at least one target communication object, which is at least one of a target communication object configured already or a target communication object rejected to be configured.

Steps 801 to 802 may be achieved in any implementation in the embodiments of the disclosure, respectively, which is not limited in the embodiments of the disclosure and will not be repeated.

At step 803, a second feedback message is sent to the source SN associated with the source MN according to the first feedback message for mobility management received from the second communication node, and/or, in response to not receiving at least one first feedback message from the second communication node within a preset time period, a feedback message of rejecting the mobility management is sent to the source SN associated with the source MN.

The preset time period is a preset duration threshold.

In an embodiment of the disclosure, when the S-MN receives the first feedback message from the second communication node within the preset time period, the S-MN may send the second feedback message to the source SN associated with the source MN according to the first feedback message for mobility management received from the second communication node.

As an example, when the first feedback message received by the S-MN is a feedback message of accepting the mobility management, the second feedback message sent by the S-MN to the S-SN is a feedback message of accepting the mobility management, and/or, when the first feedback message received by the S-MN is a feedback message of rejecting the mobility management, the second feedback message sent by the S-MN to the S-SN is a feedback message of rejecting the mobility management.

In embodiments of the disclosure, when the S-MN does not receive at least one first feedback message from the second communication node within the preset time period, the S-MN may send a feedback message of rejecting the mobility management to the S-SN.

In any embodiment of the disclosure, the first request message may also be used to indicate recommended configuration information of the target communication object recommended to be configured.

In any embodiment of the disclosure, the first feedback message may also be used to indicate configuration information of the target communication object configured already.

In the configuration information transmission method of the embodiments of the disclosure, the S-MN receives the second request message for mobility management sent by the S-SN associated with the S-MN and sends the first request message to the second communication node to indicate at least one target communication object recommended to be configured and/or at least one target communication object not recommended to be configured of the S-SN associated with the S-MN, so that the S-SN or S-MN can participate in selecting the target communication object, and the selected target communication object can be compatible with a requirement of the mobility management actively initiated by the S-MN or S-SN, and/or, the second communication node sends the first feedback message to the S-MN to indicate the target communication object configured already and/or the target communication object rejected to be configured of the second communication node, so that the S-MN can be aware of the target communication object configured already and/or the target communication object rejected to be configured in time, and the mobility management is within the control of the S-MN. The S-MN sends the second feedback message to the S-SN to indicate the target communication object configured already and/or the target communication object rejected to be configured of the second communication node, so that the S-SN can be aware of the target communication object configured already and/or the target communication object rejected to be configured in time, and the mobility management is within the control of the S-SN.

It should be noted that the above-mentioned various possible implementations can be executed separately or in combination, which is not limited in the disclosure.

As illustrated in FIG. 9, FIG. 9 is a flowchart of a configuration information transmission method provided by an embodiment of the disclosure. The configuration information transmission method may be performed by a first communication node. The first communication node may be an S-MN or S-SN on a network device side in the communication system shown in FIG. 4. The explanatory description of S-MN or S-SN can be found in the relevant description in any embodiment of the disclosure and will not be repeated herein.

The configuration information transmission method may be performed alone, or in combination with any embodiment or possible implementation of the embodiments of the disclosure, or in combination with any of the technical solutions in the related art.

As illustrated in FIG. 9, the configuration information transmission method includes but is not limited to the following steps.

At step 901, a first request message for mobility management is sent to a second communication node, and/or, a first feedback message for mobility management is received from the second communication node, in which the first request message indicates at least one target communication object which is at least one of a target communication object recommended to be configured or a target communication object not recommended to be configured, and the first request message may also be used to indicate, either explicitly or implicitly, a third communication node.

The at least one target communication object indicated by the first feedback message is at least one of a target communication object configured already or a target communication object rejected to be configured.

It is noted that step 901 may be implemented in any implementation of the embodiments of the disclosure, which is not limited in the embodiments of the disclosure and will not be repeated.

In a possible implementation of embodiment of the disclosure, if the target communication object includes a target node, the third communication node may be a node for communication between the second communication node and the target communication object in the first request message, and/or, if the target communication object includes a target cell and/or a target CG, the third communication node may be a node for communication between the second communication node and a target node corresponding to the target communication object in the first request message.

In another possible implementation of the embodiments of the disclosure, if the target communication object includes a target node, the third communication node may be at least one target communication object recommended to be configured in the first request message, or, if the target communication object includes a target cell and/or a target CG, the third communication node may be at least one target node corresponding to the target communication object recommended to be configured in the first request message.

There is at least one third communication node. For example, if there is one target communication object or one target node corresponding to the target communication object, there is only one third communication node. If there are a plurality of target communication nodes or a plurality of target nodes corresponding to the target communication nodes, there may be multiple third communication nodes.

In the embodiment of the disclosure, the first request message sent by the first communication node to the second communication node may indicate at least one target communication object, and it may also, either explicitly or implicitly, indicate the third communication node. Correspondingly, after receiving the first request message, the second communication node may send a third request message for mobility management to at least one third communication node according to the first request message.

In an implementation, the third request message may be used to indicate at least one target communication object recommended to be configured that is recommended by the second communication node, and/or, the third request message may be used to indicate at least one target communication object not recommended to be configured that is not recommended by the second communication node.

As an example, the second communication node may determine at least one target communication object recommended to be configured that is recommended by the second communication node and/or at least one target communication object not recommended to be configured that is not recommended by the second communication node according to the at least one target communication object indicated by the first request message, generate the third request message according to the at least one target communication object recommended to be configured that is recommended by the second communication node and/or the at least one target communication object not recommended to be configured that is not recommended by the second communication node, and send the third request message to at least one third communication node.

In embodiments of the disclosure, after receiving the third request message, the third communication node may send a third feedback message to the second communication node according to the third request message. Correspondingly, after receiving the third feedback message sent by at least one third communication node, the second communication node may generate a first feedback message according to the third feedback message sent by the at least one third communication node and send the first feedback message to the first communication node.

As an example, if at least one third feedback message received by the second communication node is a feedback message of accepting the mobility management, the first feedback message generated by the second communication node may be a feedback message of accepting the mobility management.

As another example, when all the third feedback messages received by the second communication node are feedback messages of rejecting the mobility management, the first feedback message generated by the second communication node is a feedback message of rejecting the mobility management.

It should be noted that, if the second communication node does not receive a third feedback message from any third communication node within a preset time period, the first feedback message generated by the second communication node may be a feedback message of rejecting the mobility management.

For example, in an application scenario, the first communication node is an S-MN, the second communication node is a T-MN, and the third communication object and the target communication object are T-SNs, the S-MN can initiate a mobility management procedure for the MCG and SCG, and the first request message sent by the S-MN to the T-MN may carry one or more T-SNs recommended to be configured that is recommended by the T-MN.

After receiving the first request message sent by the S-MN, if the T-MN cannot determine a set of MCG configurations, the T-MN may send a feedback message of rejecting the mobility management to the S-MN, and end the procedure. If the T-MN can determine a set of MCG configurations, the T-MN can send a third request message to one or more T-SNs recommended to be configured.

After receiving the third request message sent by the T-MN, if the T-SN can determine a set of SCG configurations according to the third request message, the T-SN can send a feedback message of accepting the mobility management to the T-MN. If the T-SN cannot determine a set of SCG configurations according to the third request message, the T-SN can send a feedback message of rejecting the mobility management to the T-MN.

When the T-MN receives a feedback message of accepting the mobility management sent by at least one T-SN recommended to be configured, the T-MN may send a feedback message of accepting the mobility management to the S-MN and determine to accept the mobility management initiated by the S-MN. The above feedback message may carry one or more correspondingly configured T-SNs and/or SCG configurations (recorded as configuration information of the target communication object configured already in this disclosure). When all the feedback messages received by the T-MN are feedback messages of rejecting the mobility management, the T-MN may send a feedback message of rejecting the mobility management to the S-MN, and end the procedure.

For example, in another application scenario, the first communication node is an S-MN, the second communication node is a T-MN, and the third communication object and the target communication object are T-SNs, the S-MN initiates a mobility management procedure for the MCG, and at the same time or before that, the S-SN associated with the S-MN initiates a mobility management procedure for the SCG. The S-SN can send a second request message to the S-MN, and the second request message can carry one or more T-SNs or SCGs recommended to be configured that are recommended by the S-SN and/or an MCG recommended by the S-MN, to initiate the mobility management procedure for the SCG.

After receiving the second request message, if the S-MN determines that it cannot perform the mobility management for the SCG, the S-MN may send a feedback message of rejecting the mobility management to the S-SN, and end the procedure. If the S-MN determines that it can perform the mobility management for the SCG, the S-MN can initiate a mobility management procedure for the MCG and simultaneously perform the mobility management procedure for the SCG initiated by the S-SN. The S-MN can send a first request message to the T-MN, and the first request message carries one or more T-SNs or SCGs recommended to be configured in the second request message.

After receiving the first request message sent by the S-MN, if the T-MN cannot determine a set of MCG configurations from the MCGs recommended to be configured that are recommended by S-MN, the T-MN can send a feedback message of rejecting the mobility management to the S-MN, and end the procedure. If the T-MN can determine a set of MCG configurations from the MCGs recommended to be configured that are recommended by the S-MN, the T-MN can send a third request message to one or more T-SNs recommended to be configured.

After receiving the third request message sent by the T-MN, if the T-SN can determine a set of SCG configurations according to the third request message, the T-SN can send a feedback message of accepting the mobility management to the T-MN. If the T-SN cannot determine a set of SCG configurations according to the third request message, the T-SN can send a feedback message of rejecting the mobility management to the T-MN.

When the T-MN receives a feedback message of accepting the mobility management sent by at least one T-SN recommended to be configured, the T-MN may send a feedback message of accepting the mobility management to the S-MN and determine to accept the mobility management procedure initiated by the S-MN. The above feedback message may carry one or more correspondingly configured T-SNs and/or SCG configurations (recorded as configuration information of the target communication object configured already in this disclosure). When all the feedback messages received by the T-MN are feedback messages of rejecting the mobility management, the T-MN may send a feedback message of rejecting the mobility management to the S-MN, and end the procedure.

If the S-MN receives a feedback message of accepting the mobility management sent by at least one T-MN, the S-MN may send a feedback message of accepting the mobility management to the S-SN and determine to accept a mobility management procedure initiated by the S-SN. The feedback message of accepting the mobility management sent by the S-MN to the S-SN may also carry one or more of a correspondingly configured T-MN, a configured T-SN, an MCG configuration, and an SCG configuration. If the feedback messages received by the S-MN are all feedback messages of rejecting the mobility management, the S-MN may send a feedback message of rejecting the mobility management to the S-SN, and end the procedure.

In the configuration information transmission method of the embodiments of the disclosure, the first communication node sends the first request message to the second communication node, to indicate at least one target communication object recommended to be configured that is recommended by the first communication node and/or at least one target communication object not recommended to be configured that is not recommended by the first communication node, so that the first communication node can participate in selecting the target communication object, and the selected target communication object can be compatible with a requirement of the mobility management actively initiated by the first communication node, and/or, the second communication node sends the first feedback message to the first communication node, to indicate the target communication object configured already and/or the target communication object rejected to be configured, so that the first communication node can be aware of the target communication object configured already and/or the target communication object rejected to be configured in time, and the mobility management is within the control of the first communication node.

It should be noted that the above-mentioned various possible implementations can be executed separately or in combination, which is not limited in the disclosure.

As illustrated in FIG. 10, FIG. 10 is a flowchart of a configuration information transmission method provided by an embodiment of the disclosure. The configuration information transmission method may be performed by a first communication node. The first communication node may be an S-MN, an S-SN, or a T-MN on a network device side in the communication system shown in FIG. 4. The explanation of S-MN or S-SN can refer to the relevant description in any embodiment of the disclosure, and will not be repeated here.

The configuration information transmission method may be performed alone, or in combination with any embodiment or possible implementation of the embodiments of the disclosure, or in combination with any of the technical solutions in the related art.

As illustrated in FIG. 10, the configuration information transmission method includes but is not limited to the following steps.

At step 1001, a first request message for mobility management is sent to a second communication node, and/or, a first feedback message for mobility management is received from the second communication node, in which the mobility management includes but is not limited to at least one of the following: selective activation of CGs, and a condition-triggered mobility management.

At least one target communication object indicated by the first request message is at least one of a target communication object recommended to be configured or a target communication object not recommended to be configured. At least one target communication object indicated by the first feedback message is at least one of a target communication object configured already or a target communication object rejected to be configured.

It should be noted that step 1001 can be implemented in any implementation in the embodiments of the disclosure, which is not limited in the embodiments of the disclosure and will not be described in detail.

In the embodiment of the disclosure, the mobility management includes but is not limited to at least one of the following: the selective activation of CGs, and the condition-triggered mobility management.

In any embodiment of the disclosure, if the target communication object includes a target node and a target cell, the first request message can also be used to indicate a correspondence between the target node and the target cell. If the target communication object includes a target node and a target CG, the first request message can also be used to indicate a correspondence between the target node and the target CG.

It should be noted that one node can provide one cell or multiple cells. For example, the same target node can correspond to at least one target cell. In the disclosure, in order to facilitate determination of the target communication object, the first request message may indicate the correspondence between the target node and the target cell. Therefore, in the disclosure, the target cell corresponding to the target node can be queried according to the above correspondence, and the target node and the target cell corresponding to the target node can be configured as the target communication objects.

Similarly, one node can provide one CG or multiple CGs. For example, the same target node can correspond to at least one target CG. In the disclosure, in order to facilitate the determination of the target communication object, the first request message may also indicate the correspondence between the target node and the target CG. Therefore, in the disclosure, the target CG corresponding to the target node can be queried according to the above correspondence, and the target node and the target CG corresponding to the target node can be configured as the target communication objects.

For example, the first request message may indicate at least one of a target MN and its associated MCG, a target SN and its associated SCG, a target MN and its associated PCell, or a target SN and its associated PSCell.

In any embodiment of the disclosure, the first request message may include but is not limited to at least one of the following: a handover request message (which can be used, for example, to request to switch a PCell or an MCG), an SN addition request message, an SN modification request message, and an SN change required message.

As an example, the handover request message (HANDOVER REQUEST) may be sent by a source NG-RAN node to a target NG-RAN node. The handover request message is used to request the preparation of resources for a handover. The transmission direction is from the source NG-RAN node to the target NG-RAN node.

As an example, the SN addition request message (S-NODE ADDITION REQUEST) can be sent by a master-NG-RAN (M-NG-RAN) node to a secondary-NG-RAN (S-NG-RAN) node. The SN addition request message is used to request the preparation of resources for a DC operation for a specific UE. The transmission direction is from the M-NG-RAN node to the S-NG-RAN node.

As an example, the SN modification request message (S-NODE MODIFICATION REQUEST) can be sent by the M-NG-RAN node to the S-NG-RAN node. The SN modification request message is used to request the preparation to modify S-NG-RAN node resources for a specific UE, or query for the current SCG configuration, or provide the secondary-Radio Link Failure (S-RLF)-related information to the S-NG-RAN node. The transmission direction is from the M-NG-RAN node to the S-NG-RAN node.

As an example, the SN change required message (S-NODE CHANGE REQUIRED) can be sent by the S-NG-RAN node to the M-NG-RAN node. The SN change required message is used to trigger the change of the S-NG-RAN node. The transmission direction is from the S-NG-RAN node to the M-NG-RAN node.

In any embodiment of the disclosure, the feedback message of accepting the mobility management includes but is not limited to at least one of the following: a handover request acknowledge message, an SN addition request acknowledge message, an SN modification request acknowledge message, and an SN change confirm message.

As an example, the handover request acknowledge message (HANDOVER REQUEST ACKNOWLEDGE) may be sent by the target NG-RAN node to the source NG-RAN node. The handover request acknowledge message is used to inform the source NG-RAN node about the prepared resources at the target NG-RAN node. The transmission direction is from the target NG-RAN node to the source NG-RAN node.

As an example, the SN addition request acknowledge message (S-NODE ADDITION REQUEST ACKNOWLEDGE) is sent by the S-NG-RAN node to the M-NG-RAN node. The SN addition request acknowledge message is used to confirm with the M-NG-RAN node about the S-NG-RAN node addition preparation). The transmission direction is from the S-NG-RAN node to the M-NG-RAN node.

As an example, the SN modification request acknowledge message (S-NODE MODIFICATION REQUEST ACKNOWLEDGE) is transmitted by the S-NG-RAN node to the M-NG-RAN node. The SN modification request acknowledge message is used to confirm the M-NG-RAN node's request to modify the S-NG-RAN node resources for a specific UE. The transmission direction is from the S-NG-RAN node to the M-NG-RAN node.

As an example, the SN change confirm message (S-NODE CHANGE CONFIRM) may be sent by the M-NG-RAN node to the S-NG-RAN node. The SN change confirm message is used to inform the S-NG-RAN node that the preparation of the S-NG-RAN node initiated S-NG-RAN node change was successful. The transmission direction is from the M-NG-RAN node to the S-NG-RAN node.

In any embodiment of the disclosure, the feedback message of rejecting the mobility management includes but is not limited to at least one of the following: a handover preparation failure message, an SN addition request reject message, an SN modification request reject message, and an SN change refuse message.

As an example, the handover preparation failure message (HANDOVER PREPARATION FAILURE) may be sent by the target NG-RAN node to the source NG-RAN node. The handover preparation failure message is used to inform the source NG-RAN node that the handover preparation has failed. The transmission direction is from the target NG-RAN node to the source NG-RAN node.

As an example, the SN addition request reject message (S-NODE ADDITION REQUEST REJECT) is sent by an S-NG-RAN to an M-NG-RAN node. The SN addition request reject message is used to inform the M-NG-RAN node that the S-NG-RAN node addition preparation has failed. The transmission direction is from the S-NG-RAN node to the M-NG-RAN node.

As an example, the SN modification request reject message (S-NODE MODIFICATION REQUEST REJECT) is sent by the S-NG-RAN to the M-NG-RAN node. The SN modification request reject message is used to inform the M-NG-RAN node that the M-NG-RAN node initiated S-NG-RAN node modification preparation has failed). The transmission direction is from the S-NG-RAN node to the M-NG-RAN node.

As an example, the SN change refuse message (S-NODE CHANGE REFUSE) is sent by the M-NG-RAN node to the S-NG-RAN node. The SN change refuse message is used to inform the S-NG-RAN node that the preparation of the S-NG-RAN node initiated S-NG-RAN node change has failed. The transmission direction is from the M-NG-RAN node to the S-NG-RAN node.

In the configuration information transmission method of the embodiments of the disclosure, the first communication node sends the first request message to the second communication node, to indicate at least one target communication object recommended to be configured that is recommended by the first communication node and/or at least one target communication object not recommended to be configured that is not recommended by the first communication node, so that the first communication node can participate in selecting the target communication object, and the selected target communication object can be compatible with a requirement of the mobility management actively initiated by the first communication node, and/or, the second communication node sends the first feedback message to the first communication node, to indicate the target communication object configured already and/or the target communication object rejected to be configured, so that the first communication node can be aware of the target communication object configured already and/or the target communication object rejected to be configured in time, and the mobility management is within the control of the first communication node.

It should be noted that the above-mentioned various possible implementations can be executed separately or in combination, which is not limited in the disclosure.

In any embodiment of the disclosure, the first communication node (or referred to as an initiator node) may initiate a mobility management procedure through the first request message for mobility management. The first request message carries one or more target communication objects recommended to be configured and/or one or more target communication objects not recommended to be configured.

In any embodiment of the disclosure, after receiving the first request message for mobility management sent by the first communication node, the second communication node (or referred to as a receipt node) can confirm whether the mobility management is accepted or rejected by sending the corresponding first feedback message, and the first feedback message can carry one or more target communication objects configured already and/or target communication objects rejected to be configured.

If the first request message for mobility management does not carry one or more target communication objects recommended to be configured and/or one or more target communication objects not recommended to be configured, the second communication node may also carry one or more target communication objects configured already in the first feedback message, which are determined by the second communication node.

For example, if the second communication node receives the first request message, the second communication node may also carry one or more target communication objects configured already in the first feedback message, which are determined by the second communication node.

In any one of the embodiments of the disclosure, the first communication node may include an S-MN, an S-SN, and the second communication node may include a T-MN, a T-SN.

In any one of the embodiments of the disclosure, the second communication node may select all or some of the target communication objects recommended to be configured in the first request message, or the second communication node may reject all or some of the target communication objects recommended to be configured in the first request message.

As an example, if the second communication node selects at least one target communication object recommended to be configured, it sends a feedback message of accepting the mobility management to the first communication node, accepts the mobility management procedure, and carries the target communication object configured already and/or the target communication object rejected to be configured in the above feedback message.

As an example, if the second communication node rejects all the target communication objects recommended to be configured, it may send a feedback message of rejecting the mobility management to the first communication node, to reject the mobility management procedure.

As an example, if the second communication node selects at least one target communication object other than the target communication objects not recommended to be configured, it sends a feedback message of accepting the mobility management to the first communication node, accepts the mobility management procedure, and carries the target communication object configured already and/or the target communication object rejected to be configured in the above feedback message.

As an example, if the second communication object cannot select at least one target communication object other than the target communication objects not recommended to be configured, it sends a feedback message of rejecting the mobility management to the first communication object to reject the mobility management procedure.

As an example, if the second communication node selects a target communication object not recommended to be configured, it also sends a feedback message of accepting the mobility management to the first communication node, and carry the target communication object configured already and/or the target communication object rejected to be configured in the above feedback message.

For example, the second communication node that sends the feedback message of accepting the mobility management and/or the corresponding target communication object configured already may reserve resources for the request for the mobility management.

For example, the second communication node that sends the feedback message of rejecting the mobility management may not reserve resources for the request for the mobility management.

In any embodiment of the disclosure, after receiving the first request message, the second communication node may also send a third request message to the target communication object (or the target node corresponding to the target communication object). After receiving a third feedback message sent by the target communication object (or the target node corresponding to the target communication object), the second communication node generates a first feedback message according to the third feedback message, and sends the first feedback message to the first communication node.

As an example, if the second communication node receives the third feedback message from at least one target communication object recommended to be configured (or the target node corresponding to the target communication object), which is a feedback message of accepting the mobility management, the second communication node may generate the first feedback message, which is a feedback message of accepting the mobility management, and carry the target communication object configured already and/or the target communication object rejected to be configured in the first feedback message.

As an example, if all the third feedback messages received by the second communication node from the target communication objects recommended to be configured (or the target nodes corresponding to the target communication objects) are feedback messages of rejecting the mobility management, the second communication node may generate a first feedback message of rejecting the mobility management. Alternatively, if the second communication node does not receive any third feedback message, the second communication node may generate a first feedback message of rejecting the mobility management.

The process for at least one target communication object not recommended to be configured included in the first request message for mobility management is similar to the process for the target communication object recommended to be configured, which is not repeated herein.

If the second communication node sends the third request message to the target communication object (or the target node corresponding to the target communication object), it is necessary to indicate the target communication object in the third request message.

In any embodiment of the disclosure, after receiving the first request message, if the second communication node is unable or does not need to directly send the third request message to the target communication object (or the target node corresponding to the target communication object), the second communication node may send the third request message for mobility management to an associated node (i.e., the third communication node in the disclosure, which may be a node used for communication between the second communication node and the target communication object in the first request message, and/or, a node used for communication between the second communication node and a target node corresponding to the target communication object in the first request message), and the associated node sends the third feedback message to the second communication node. The associated node is a node that needs to be associated with the target communication object (or the target node corresponding to the target communication object) included in the first request message during the mobility management.

As an example, if the second communication node receives the third feedback message sent by at least one associated node, which is a feedback message of accepting the mobility management, the second communication node send a first feedback message to the first communication node, which is a first feedback message of accepting the mobility management.

As an example, if all the third feedback messages sent by the associated nodes to the second communication node are feedback messages of rejecting the mobility management, the second communication node sends a first feedback message of rejecting the mobility management to the first communication node. Alternatively, if the second communication node does not receive any feedback message, the second communication node sends a first feedback message of rejecting the mobility management to the first communication node.

As an example, the first request message of mobility management may include the associated node. Optionally, the first request message may include a target node corresponding to the associated node.

In any embodiment of the disclosure, if the target communication object includes a target node and a target cell, the first request message may also carry a correspondence between the target node and the target cell. For example, the target communication object recommended to be configured may include the correspondence between the target node and the target cell. If the target communication object includes a target node and a target CG, the first request message may also carry a correspondence between the target node and the target CG. For example, the target communication object recommended to be configured may include the correspondence between the target node and the target CG.

For example, the first request message may indicate at least one of a target MN and its associated MCG, a target SN and its associated SCG, a target MN and its associated PCell, or a target SN and its associated PSCell.

In any embodiment of the disclosure, the first request message for mobility management may include but is not limited to one or more of the following: a handover request message, an SN addition request message, an SN modification request message, and an SN change required message.

In any embodiment of the disclosure, the first feedback message for mobility management includes but is not limited to one or more of the following:
a feedback message of accepting the mobility management: a handover request acknowledge message, an SN addition request acknowledge message, an SN modification request acknowledge message, and an SN change confirm message; and
a feedback message of rejecting the mobility management: a handover preparation failure message, an SN addition request reject message, an SN modification request reject message, and an SN change refuse message.

In any embodiment of the disclosure, if the first request message carries one or more target communication objects recommended (or not recommended) to be configured, an identifier of the target communication object can be included to represent them. If the first feedback message carries one or more target communication objects configured already (or rejected to be configured), the identifier of target communication object can be included to represent them.

In any embodiment of the disclosure, the first request message may also carry recommended configuration information of the target communication object recommended to be configured. The first feedback message may also carry configuration information of the target communication object configured already.

As illustrated in FIG. 11, FIG. 10 is a flowchart of a configuration information transmission method provided by an embodiment of the disclosure. The configuration information transmission method may be performed by a second communication node. The second communication node may be a T-MN, a T-SN, or an S-MN on a network device side in the communication system shown in FIG. 4. The explanation of the T-MN, the T-SN, or the S-MN can refer to the relevant description in any embodiment of the disclosure, and will not be repeated here.

The configuration information transmission method may be performed alone, or in combination with any embodiment or possible implementation of the embodiments of the disclosure, or in combination with any of the technical solutions in the related art.

As illustrated in FIG. 11, the configuration information transmission method includes but is not limited to the following steps.

At step 1101, a first request message for mobility management sent by a first communication node is received, and/or, a first feedback message for mobility management is sent to the first communication node.

At least one target communication object indicated by the first request message is at least one of a target communication object recommended to be configured or a target communication object not recommended to be configured. At least one target communication object indicated by the first feedback message is at least one of a target communication object configured already or a target communication object rejected to be configured.

In a possible implementation of the embodiments of the disclosure, in response to at least one target communication object configured already being the target communication object recommended to be configured in the first request message, the first feedback message is a feedback message of accepting the mobility management; and/or, in response to no target communication object configured already being the target communication object recommended to be configured in the first request message, the first feedback message is a feedback message of rejecting the mobility management; and/or, in response to the target communication object rejected to be configured comprising all target communication objects recommended to be configured in the first request message, the first feedback message is a feedback message of rejecting the mobility management.

In a possible implementation of the embodiments of the disclosure, in response to at least one target communication object configured already not being the target communication object not recommended to be configured in the first request message, the first feedback message is a feedback message of accepting the mobility management; and/or, in response to each target communication object configured already belonging to the target communication object not recommended to be configured in the first request message, the first feedback message is a feedback message of rejecting the mobility management; and/or, in response to the target communication object rejected to be configured comprising at least one target communication object not recommended to be configured in the first request message, the first feedback message is a feedback message of accepting the mobility management.

In a possible implementation of the embodiments of the disclosure, the first request message is further configured to indicate recommended configuration information of the target communication object recommended to be configured.

In a possible implementation of the embodiments of the disclosure, further configured to indicate configuration information of the target communication object configured already.

In a possible implementation of the embodiments of the disclosure, the second communication node sends a third request message for the mobility management to at least one third communication node according to the first request message, in which the third request message is configured to indicate at least one target communication object recommended to be configured that is recommended by the second communication node, and/or, at least one target communication object not recommended to be configured that is not recommended by the second communication node.

In a possible implementation of the embodiments of the disclosure, in response to receiving a third feedback message from at least one third communication node, the second communication node determines the first feedback message according to the third feedback message sent by the at least one third communication node; and/or, in response to not receiving a third feedback message from any third communication node within a preset time period, the second communication node determines that the first feedback message is a feedback message of rejecting the mobility management.

In a possible implementation of embodiment of the disclosure, the third communication node is a node for communication between the second communication node and the target communication object in the first request message, and/or, the third communication node is a node for communication between the second communication node and the target node corresponding to a target communication object in the first request message.

In a possible implementation of embodiment of the disclosure, the first request message is also used to indicate, either explicitly or implicitly, the third communication node.

In a possible implementation of embodiment of the disclosure, the third communication node is at least one target node corresponding to the target communication object recommended to be configured in the first request message, or, the third communication node is at least one target communication object recommended to be configured in the first request message.

In a possible implementation of embodiment of the disclosure, in response to at least one received third feedback message being a feedback message of accepting the mobility management, the first feedback message is a feedback message of accepting the mobility management, and/or, in response to each of the received third feedback messages being a feedback message of rejecting the mobility management, the first feedback message is a feedback message of rejecting the mobility management.

In a possible implementation of embodiment of the disclosure, the target communication object includes at least one of the following: a target node, a target cell, or a target CG.

In a possible implementation of embodiment of the disclosure, in response to the target communication object including the target node and the target cell, the first request message is further used to indicate a correspondence between the target node and the target cell. In response to the target communication object including the target node and the target CG, the first request message is further used to indicate a correspondence between the target node and the target CG.

In a possible implementation of embodiment of the disclosure, the target node includes at least one of a target MN or a target SN, and/or, the target cell includes at least one of a target PCell, a target SCell, or a target PSCell, and/or, the target CG includes at least one of a target MCG or a target SCG.

In a possible implementation of embodiment of the disclosure, mobility management includes but is not limited to at least one of the following: selective activation of CGs, and a condition-triggered mobility management.

It is noted that the explanatory description of the configuration information transmission method performed by the first communication node in any of the foregoing embodiments is also applicable to the configuration information transmission method performed by the second communication node, the implementation principles are similar and will not be repeated herein.

In the configuration information transmission method of the embodiments of the disclosure, the first communication node sends the first request message to the second communication node, to indicate at least one target communication object recommended to be configured that is recommended by the first communication node and/or at least one target communication object not recommended to be configured that is not recommended by the first communication node, so that the first communication node can participate in selecting the target communication object, and the selected target communication object can be compatible with a requirement of the mobility management actively initiated by the first communication node, and/or, the second communication node sends the first feedback message to the first communication node, to indicate the target communication object configured already and/or the target communication object rejected to be configured, so that the first communication node can be aware of the target communication object configured already and/or the target communication object rejected to be configured in time, and the mobility management is within the control of the first communication node.

It should be noted that the above-mentioned various possible implementations can be executed separately or in combination, which is not limited in the disclosure.

In the above-described embodiments of the disclosure, the methods provided in the embodiments of the disclosure are described from the perspective of the first communication node and the second communication node, respectively. In order to implement each of the functions in the methods provided by the above embodiments of the disclosure, the first communication node and the second communication node may include a hardware structure and/or a software module to implement each of the above functions in the form of a hardware structure, a software module, or a combination of the hardware structure and the software module. A certain function of the above-described functions may be performed in the form of a hardware structure, a software module, or a combination of the hardware structure and the software module.

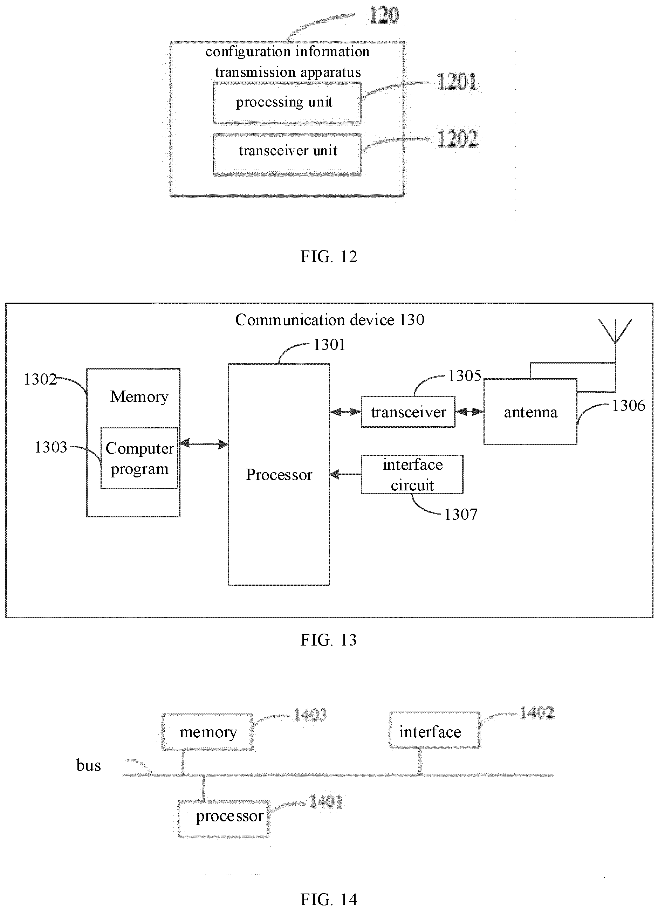

FIG. 12 is a schematic diagram of a configuration information transmission apparatus 120 provided in an embodiment of the disclosure. The configuration information transmission apparatus 120 shown in FIG. 12 may include a processing unit 1201 and a transceiver unit 1202. The transceiver unit 1202 may include a sending unit and/or a receiving unit. The sending unit is used to implement a sending function, and the receiving unit is used to implement a receiving function. The transceiver unit can implement the sending function and/or the receiving function.

The configuration information transmission apparatus 120 may be a communication node (e.g., a first communication node or a second communication node), an apparatus in the communication node, or an apparatus capable of being used together with the communication node.

If the configuration information transmission apparatus 120 is a first communication node,
the transceiver unit 1202 is configured to: send a first request message for mobility management to a second communication node, and/or, receive a first feedback message for mobility management from the second communication node, in which at least one target communication object indicated by the first request message is at least one of a target communication object recommended to be configured or a target communication object not recommended to be configured; at least one target communication object indicated by the first feedback message is at least one of a target communication object configured already or a target communication object rejected to be configured.

In some embodiments, in response to at least one target communication object configured already being the target communication object recommended to be configured in the first request message, the first feedback message is a feedback message of accepting the mobility management; and/or, in response to no target communication object configured already being the target communication object recommended to be configured in the first request message, the first feedback message is a feedback message of rejecting the mobility management; and/or, in response to the target communication object rejected to be configured comprising all target communication objects recommended to be configured in the first request message, the first feedback message is a feedback message of rejecting the mobility management.

In some embodiments, in response to at least one target communication object configured already not being the target communication object not recommended to be configured in the first request message, the first feedback message is a feedback message of accepting the mobility management; and/or, in response to each target communication object configured already belonging to the target communication object not recommended to be configured in the first request message, the first feedback message is a feedback message of rejecting the mobility management; and/or, in response to the target communication object rejected to be configured comprising at least one target communication object not recommended to be configured in the first request message, the first feedback message is a feedback message of accepting the mobility management.

In some embodiments, if the first communication node is a source MN, the transceiver unit 1202 is further configured to: receive a second request message for mobility management from a source SN associated with the source MN, in which the second request message is configured to indicate at least one target communication object recommended to be configured that is recommended by the source secondary node, and/or at least one target communication object not recommended to be configured that is not recommended by the source secondary node.

In some embodiments, if the first communication node is a source MN, the transceiver unit 1202 is further configured to: send a second feedback message to a source SN associated with the source MN according to the first feedback message for mobility management received from the second communication node, and/or, in response to not receiving at least one first feedback message from the second communication node within a preset time period, send a feedback message of rejecting the mobility management to a source SN associated with the source MN.

In some embodiments, in response to the first feedback message being a feedback message of accepting the mobility management, the second feedback message sent to the source secondary node is a feedback message of accepting the mobility management; and/or, in response to the first feedback message being a feedback message of rejecting the mobility management, the second feedback message sent to the source secondary node is a feedback message of rejecting the mobility management.

In some embodiments, the first request message is further configured to indicate recommended configuration information of the target communication object recommended to be configured.

In some embodiments, the first feedback message is further configured to indicate configuration information of the target communication object configured already.

In some embodiments, the first request message is further configured to indicate a third communication node, in which the third communication node is a node for communication between the second communication node and a target node corresponding to the target communication object in the first request message, and/or, the third communication node is a node for communication between the second communication node and the target communication object in the first request message.

In some embodiments, the target communication object includes at least one of the following: a target node, a target cell, or a target CG.

In some embodiments, in response to the target communication object comprising the target node and the target cell, the first request message is further configured to indicate a correspondence between the target node and the target cell. In response to the target communication object comprising the target node and the target cell group, the first request message is further configured to indicate a correspondence between the target node and the target cell group.

In some embodiments, the target node includes at least one of a target MN or a target SN, and/or, the target cell includes at least one of a target PCell, a target SCell, or a target PSCell, and/or, the target CG includes at least one of a target MCG or a target SCG.

In some embodiments, the mobility management includes but is not limited to at least one of the following: selective activation of CGs, and a condition-triggered mobility management.

If the configuration information transmission apparatus 120 is a second communication node,
the transceiver unit 1202 is configured to: receive a first request message for mobility management sent by a first communication node, and/or, send a first feedback message for mobility management to the first communication node, in which at least one target communication object indicated by the first request message is at least one of a target communication object recommended to be configured or a target communication object not recommended to be configured; at least one target communication object indicated by the first feedback message is at least one of a target communication object configured already or a target communication object rejected to be configured.

In some embodiments, in response to at least one target communication object configured already being the target communication object recommended to be configured in the first request message, the first feedback message is a feedback message of accepting the mobility management; and/or, in response to no target communication object configured already being the target communication object recommended to be configured in the first request message, the first feedback message is a feedback message of rejecting the mobility management; and/or, in response to the target communication object rejected to be configured comprising all target communication objects recommended to be configured in the first request message, the first feedback message is a feedback message of rejecting the mobility management.

In some embodiments, in response to at least one target communication object configured already not being the target communication object not recommended to be configured in the first request message, the first feedback message is a feedback message of accepting the mobility management; and/or, in response to each target communication object configured already belonging to the target communication object not recommended to be configured in the first request message, the first feedback message is a feedback message of rejecting the mobility management; and/or, in response to the target communication object rejected to be configured comprising at least one target communication object not recommended to be configured in the first request message, the first feedback message is a feedback message of accepting the mobility management.

In some embodiments, the first request message is further configured to indicate recommended configuration information of the target communication object recommended to be configured.

In some embodiments, the first feedback message is further configured to indicate configuration information of the target communication object configured already.

In some embodiments, the transceiver unit 1202 is configured to: send a third request message for mobility management to at least one third communication node according to the first request message, in which the third request message is configured to indicate at least one target communication object recommended to be configured that is recommended by the second communication node, and/or, at least one target communication object not recommended to be configured that is not recommended by the second communication node.

In some embodiments, the transceiver unit 1202 is configured to: in response to receiving a third feedback message from at least one third communication node, determine the first feedback message according to the third feedback message sent by the at least one third communication node; and/or, in response to not receiving a third feedback message from any third communication node within a preset time period, determine that the first feedback message is a feedback message of rejecting the mobility management.

In some embodiments, the third communication node is a node for communication between the second communication node and the target communication object in the first request message, and/or, the third communication node is a node for communication between the second communication node and a target node corresponding to the target communication object in the first request message.

In some embodiments, the first request message is also used to indicate, either explicitly or implicitly, the third communication node.

In some embodiments, the third communication node is at least one target node corresponding to the target communication object recommended to be configured in the first request message, or, the third communication node is at least one target communication object recommended to be configured in the first request message.

In some embodiments, in response to at least one third feedback message being a feedback message of accepting the mobility management, the first feedback message is a feedback message of accepting the mobility management; and/or, in response to each third feedback message being a feedback message of rejecting the mobility management, the first feedback message is a feedback message of rejecting the mobility management.

In some embodiments, the target communication object includes at least one of the following: a target node, a target cell, or a target CG.

In some embodiments, in response to the target communication object including the target node and the target cell, the first request message is further used to indicate a correspondence between the target node and the target cell. In response to the target communication object including the target node and the target CG, the first request message is further used to indicate a correspondence between the target node and the target CG.

In some embodiments, the target node includes at least one of a target MN or a target SN, and/or, the target cell includes at least one of a target PCell, a target SCell, or a target PSCell, and/or, the target CG includes at least one of a target MCG or a target SCG.

In some embodiments, mobility management includes but is not limited to at least one of the following: selective activation of CGs, or a condition-triggered mobility management.

It is noted that the explanatory description of the method performed on the first communication node side in any of the aforementioned embodiments of FIGS. 5-10, or, the explanatory description of the method performed on the second communication node side in the aforementioned embodiment of FIG. 11, is also applicable to the configuration information transmission apparatus 120 of this embodiment, the implementation principles are similar and will not be repeated herein.

As illustrated in FIG. 13, FIG. 13 is a schematic diagram of a communication device 130 provided by an embodiment of the disclosure. The communication device 130 may be a communication node, or a chip, a chip system or a processor that supports the communication device to realize the above-described methods. The device may be used to realize the methods described in the above method embodiments with reference to the description of the above-described method embodiments.

The communication device 130 may include one or more processors 1301. The processor 1301 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, DU, or CU), executing computer programs, and processing data of the computer programs.

Optionally, the communication device 130 may include one or more memories 1302 on which computer programs 1303 may be stored. The processor 1301 executes the computer programs 1303 to cause the communication device 130 to perform the methods described in the above method embodiments. The computer program 1303 may be solidified in the processor 1301, in which case the processor 1301 may be implemented by hardware.

Optionally, data may also be stored in the memory 1302. The communication device 130 and the memory 1302 may be provided separately or may be integrated together.

Optionally, the communication device 130 may also include a transceiver 1305 and an antenna 1306. The transceiver 1305 may be referred to as transceiver unit, transceiver machine, or transceiver circuit, for realizing the transceiver function. The transceiver 1305 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 130 may also include one or more interface circuits 1307. The interface circuits 1307 are used to receive code instructions and transmit them to the processor 1301. The processor 1301 runs the code instructions to cause the communication device 130 to perform the method described in the method embodiments.

If the communication device 130 is a first communication node, the processor 1301 is used to perform any of the method embodiments shown above in FIGS. 5-10 of the disclosure.

If the communication device 130 is a second communication node, the processor 1301 is used to perform the method embodiment shown above in FIG. 11 of the disclosure.

It is noted that the explanatory description of the configuration information transmission method in any of the aforementioned embodiments of FIGS. 5-11 is also applicable to the communication device 130 of the embodiment, and the implementation principles are similar, which will not be repeated herein.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the communication device 130 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a first communication node or a second communication node, but the scope of the communication device described in the disclosure is not limited thereto, and the structure of the communication device may not be limited by FIG. 13. The communication device may be a stand-alone device or may be part of a larger device. For example, the communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication device is a chip or a chip system may be referred to the schematic diagram of a chip shown in FIG. 14. In FIG. 14, the chip includes a processor 1401 and an interface 1402. There may be one or more processors 1401, and there may be multiple interfaces 1402.

For the case where the chip is used to implement the functions of the first communication node in the embodiments of the disclosure,
the interface 1402 is configured to receive code instructions and transmit them to the processor; and
the processor 1401 is configured to run the code instructions to implement the method as shown in any of the embodiments of FIGS. 5-10.

For the case where the chip is used to implement the functions of the second communication node in the embodiments of the disclosure,
the interface 1402 is configured to receive code instructions and transmit them to the processor; and
the processor 1401 is configured to run the code instructions to implement the method as shown in the embodiment of FIG. 11.

Optionally, the chip further includes a memory 1403 used for storing necessary computer programs and data.

It should be noted that the explanatory description of the configuration information transmission method in any of the aforementioned embodiments of FIGs. 5-11 is also applicable to the chip of this embodiment, and the implementation principles are similar, which will not be repeated herein.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a communication system. The system includes a configuration information transmission apparatus as a first communication node or a second communication node in the embodiment of FIG. 13. Or, the system includes a configuration information transmission apparatus as a first communication node or a second communication node in the embodiment of FIG. 14.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

It is further understood that the term "multiple" in the disclosure refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

The term 'if' used here can be interpreted as "when", "while" or "in response to determining".

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The foregoing are only specific implementations of the disclosure, but the scope of protection of the disclosure is not limited thereto. Any technician skilled in the art can easily think of variations or substitutions within the technical scope disclosed in the disclosure, and the variations or substitutions shall be covered by the scope of protection of the disclosure. Therefore, the scope of protection of the disclosure only be limited by the appended claims.

## Claims

1. A configuration information transmission method, applied to a first communication node, comprising:
sending a first request message for mobility management to a second communication node; and/or,
receiving a first feedback message for the mobility management from the second communication node;
wherein at least one target communication object indicated by the first request message is at least one of a target communication object recommended to be configured or a target communication object not recommended to be configured;
at least one target communication object indicated by the first feedback message is at least one of a target communication object configured already or a target communication object rejected to be configured.

2. The method of claim 1, wherein
in response to at least one target communication object configured already being the target communication object recommended to be configured in the first request message, the first feedback message is a feedback message of accepting the mobility management; and/or,
in response to no target communication object configured already being the target communication object recommended to be configured in the first request message, the first feedback message is a feedback message of rejecting the mobility management; and/or,
in response to the target communication object rejected to be configured comprising all target communication objects recommended to be configured in the first request message, the first feedback message is a feedback message of rejecting the mobility management.

3. The method of claim 1, wherein
in response to at least one target communication object configured already not being the target communication object not recommended to be configured in the first request message, the first feedback message is a feedback message of accepting the mobility management; and/or,
in response to each target communication object configured already belonging to the target communication object not recommended to be configured in the first request message, the first feedback message is a feedback message of rejecting the mobility management; and/or,
in response to the target communication object rejected to be configured comprising at least one target communication object not recommended to be configured in the first request message, the first feedback message is a feedback message of accepting the mobility management.

4. The method of claim 1, wherein the first communication node is a source master node, and the method further comprises:
receiving a second request message for the mobility management from a source secondary node associated with the source master node;
wherein the second request message is configured to indicate at least one target communication object recommended to be configured that is recommended by the source secondary node, and/or at least one target communication object not recommended to be configured that is not recommended by the source secondary node.

5. The method of claim 1, wherein the first communication node is a source master node, and the method further comprises:
sending a second feedback message to a source secondary node associated with the source master node according to the first feedback message for the mobility management received from the second communication node; and/or
in response to not receiving at least one first feedback message from the second communication node within a preset time period, sending a feedback message of rejecting the mobility management to a source secondary node associated with the source master node.

6. The method of claim 5, wherein
in response to the first feedback message being a feedback message of accepting the mobility management, the second feedback message sent to the source secondary node is a feedback message of accepting the mobility management; and/or
in response to the first feedback message being a feedback message of rejecting the mobility management, the second feedback message sent to the source secondary node is a feedback message of rejecting the mobility management.

7. The method of claim 1, wherein the first request message is further configured to indicate recommended configuration information of the target communication object recommended to be configured.

8. The method of claim 1, wherein the first feedback message is further configured to indicate configuration information of the target communication object configured already.

9. The method of any of claims 1-8, wherein the first request message is further configured to indicate a third communication node;
wherein the third communication node is a node for communication between the second communication node and a target node corresponding to the target communication object in the first request message, and/or, the third communication node is a node for communication between the second communication node and the target communication object in the first request message.

10. The method of any of claims 1-9, wherein the target communication object comprises at least one of:
a target node;
a target cell; or
a target cell group.

11. The method of claim 10, wherein
in response to the target communication object comprising the target node and the target cell, the first request message is further configured to indicate a correspondence between the target node and the target cell;
in response to the target communication object comprising the target node and the target cell group, the first request message is further configured to indicate a correspondence between the target node and the target cell group.

12. The method of claim 10, wherein
the target node comprises at least one of a target master node (MN) or a target secondary node (SN); and/or,
the target cell comprises at least one of a target primary cell (PCell), a target secondary cell (SCell), or a target primary secondary cell (PSCell); and/or
the target cell group comprises at least one of a target master cell group (MCG) or a target secondary cell group (SCG).

13. The method of any one of claims 1-12, wherein the mobility management comprises, but is not limited to, at least one of:
selective activation of cell groups; or
a condition-triggered mobility management.

14. A configuration information transmission method, applied to a second communication node, comprising:
receiving a first request message for mobility management sent by a first communication node; and/or
sending a first feedback message for the mobility management to the first communication node;
wherein at least one target communication object indicated by the first request message is at least one of a target communication object recommended to be configured or a target communication object not recommended to be configured;
at least one target communication object indicated by the first feedback message is at least one of a target communication object configured already or a target communication object rejected to be configured.

15. The method of claim 14, wherein
in response to at least one target communication object configured already being the target communication object recommended to be configured in the first request message, the first feedback message is a feedback message of accepting the mobility management; and/or,
in response to no target communication object configured already being the target communication object recommended to be configured in the first request message, the first feedback message is a feedback message of rejecting the mobility management; and/or,
in response to the target communication object rejected to be configured comprising all target communication objects recommended to be configured in the first request message, the first feedback message is a feedback message of rejecting the mobility management.

16. The method of claim 14, wherein
in response to at least one target communication object configured already not being the target communication object not recommended to be configured in the first request message, the first feedback message is a feedback message of accepting the mobility management; and/or,
in response to each target communication object configured already belonging to the target communication object not recommended to be configured in the first request message, the first feedback message is a feedback message of rejecting the mobility management; and/or,
in response to the target communication object rejected to be configured comprising at least one target communication object not recommended to be configured in the first request message, the first feedback message is a feedback message of accepting the mobility management.

17. The method of claim 14, wherein the first request message is further configured to indicate recommended configuration information of the target communication object recommended to be configured.

18. The method of claim 14, wherein the first feedback message is further configured to indicate configuration information of the target communication object configured already.

19. The method of claim 14, further comprising:
sending a third request message for the mobility management to at least one third communication node according to the first request message;
wherein the third request message is configured to indicate at least one target communication object recommended to be configured that is recommended by the second communication node, and/or, at least one target communication object not recommended to be configured that is not recommended by the second communication node.

20. The method of claim 14, further comprising:
in response to receiving a third feedback message from at least one third communication node, determining the first feedback message according to the third feedback message sent by the at least one third communication node; and/or
in response to not receiving a third feedback message from any third communication node within a preset time period, determining that the first feedback message is a feedback message of rejecting the mobility management.

21. The method of claim 19 or 20, wherein
the third communication node is a node for communication between the second communication node and the target communication object in the first request message; and/or
the third communication node is a node for communication between the second communication node and a target node corresponding to the target communication object in the first request message.

22. The method of claim 21, wherein the first request message is further configured to indicate the third communication node.

23. The method of claim 19 or 20, wherein the third communication node is at least one target node corresponding to the target communication object recommended to be configured in the first request message, or, the third communication node is at least one target communication object recommended to be configured in the first request message.

24. The method of claim 20, wherein
in response to at least one third feedback message being a feedback message of accepting the mobility management, the first feedback message is a feedback message of accepting the mobility management; and/or
in response to each third feedback message being a feedback message of rejecting the mobility management, the first feedback message is a feedback message of rejecting the mobility management.

25. The method of any of claims 14-24, wherein the target communication object comprises at least one of the following:
a target node;
a target cell; or
a target cell group.

26. The method of claim 25, wherein
in response to the target communication object comprising the target node and the target cell, the first request message is further configured to indicate a correspondence between the target node and the target cell;
in response to the target communication object comprising the target node and the target cell group, the first request message is further configured to indicate a correspondence between the target node and the target cell group.

27. The method of claim 25, wherein
the target node comprises at least one of a target master node or a target secondary node; and/or,
the target cell comprises at least one of a target primary cell, a target secondary cell, or a target primary secondary cell; and/or
the target cell group comprises at least one of a target master cell group or a target secondary cell group.

28. The method of any one of claims 14-27, wherein the mobility management comprises, but is not limited to, at least one of:
selective activation of cell groups; or
a condition-triggered mobility management.

29. A configuration information transmission apparatus, applied to a first communication node, comprising:
a transceiver unit, configured to send a first request message for mobility management to a second communication node, and/or, receive a first feedback message for the mobility management from the second communication node;
wherein at least one target communication object indicated by the first request message is at least one of a target communication object recommended to be configured or a target communication object not recommended to be configured;
at least one target communication object indicated by the first feedback message is at least one of a target communication object configured already or a target communication object rejected to be configured.

30. A configuration information transmission apparatus, applied to a second communication node, comprising:
a transceiver unit, configured to receive a first request message for mobility management sent by a first communication node, and/or, send a first feedback message for the mobility management to the first communication node;
wherein at least one target communication object indicated by the first request message is at least one of a target communication object recommended to be configured or a target communication object not recommended to be configured;
at least one target communication object indicated by the first feedback message is at least one of a target communication object configured already or a target communication object rejected to be configured.

31. A communication device, comprising: a transceiver, a memory, and a processor connected to the transceiver and the memory, respectively, and is configured to control the transceiver to receive and transmit wireless signals and to implement the method described in any one of claims 1-13 by executing computer executable instructions on the memory.

32. A communication device, comprising: a transceiver, a memory, and a processor connected to the transceiver and the memory, respectively, and is configured to control the transceiver to receive and transmit wireless signals and to implement the method described in any one of claims 14-28 by executing computer executable instructions on the memory.

33. A computer storage medium having computer-executable instructions stored thereon, wherein when the computer-executable instructions are executed by a processor, the method described in any one of claims 1-13 or the method described in any one of claims 14-28 is implemented.
